# EUROPÄISCHE PATENTSCHRIFT

(11) **EP 3 091 271 B1**
(45) Veröffentlichungstag und Bekanntmachung des Hinweises auf die Patenterteilung: **11.07.2018**
(21) Anmeldenummer: 15166414.1
(22) Anmeldetag: 05.05.2015
(51) Int. Cl.: F16P 3/14

(54) **LICHTTASTER**
LIGHT SENSOR
DÉTECTEUR OPTIQUE

(43) Veröffentlichungstag der Anmeldung: 09.11.2016
(73) Patentinhaber: SICK AG, 79183 Waldkirch (DE)
(72) Erfinder: Sigmund, Jörg, 79100 Freiburg (DE); Magnus, Albert, Dr., 79104 Freiburg (DE)

(56) Entgegenhaltungen:
- EP-A1- 2 182 377
- EP-A1- 2 910 972
- S. Pellegrini et all: "Laser-based distance measurement using picosecond resolution time-correlated single-photon counting", IOPscience Measurement Science and Technology, vol. 11, no. PII: S0957-0233(00)12036-3 22 March 2000 (2000-03-22), pages 712-716, The United Kingdom Retrieved from the Internet: URL:http://iopscience.iop.org/article/10.1 088/0957-0233/11/6/314/pdf [retrieved on 2017-05-12]

## Beschreibung

Die vorliegende Erfindung betrifft einen Lichttaster nach dem Oberbegriff von Anspruch 1 sowie ein selbstfahrendes Transportsystem nach Anspruch 11. Bei kostengünstigen selbstfahrenden Transportsystemen wird eine Kollisionsvermeidung häufig über mechanische Schalter, sogenannte Bumper oder über Ultraschallsensoren realisiert. Sicherheitslaserscanner sind für selbstfahrende Transportsysteme ebenso im Einsatz, jedoch häufig zu groß oder zu teuer.
Häufig werden auch abstandsmessende Sensoren auf Ultraschallbasis zur Kollisionsvermeidung/Nahbereichserfassung eingesetzt, beispielsweise bei Servicerobotern oder bei Industrierobotern.
Mechanische Schutzeinrichtungen haben den Nachteil, dass diese erst bei einer Berührung reagieren. Weiter sind mechanische Schutzeinrichtungen verschleißanfällig und weisen eine begrenzte Haltbarkeit auf. Weiter sind keine konfigurierbaren Schutzfeldreichweiten möglich.
Ultraschallsensoren reagieren empfindlich auf Druck/Temperatur und/oder Luftfeuchteunterschiede. Weiter ist die Richtstrahlcharakteristik von Ultraschallsensoren aufgrund der Wellenlänge nur in Grenzen beeinflussbar.
Optische Sicherheitssensoren müssen eine Reihe von Selbsttestmöglichkeiten ihrer Messkette enthalten, um ihre Funktionsfähigkeit nachzuweisen, um gemäß einer Sicherheitsnorm eine bestimmte Sicherheitskategorie bzw. einen bestimmten Sicherheitslevel zu erreichen.

Je nach gewünschter Kategorie muss die Testung unterschiedlich tief gehen. Beispielsweise muss gemäß DIN EN 61496 ein Verlust der Detektionsfähigkeit in Ansprechzeit und eine Einschränkung der Detektionsfähigkeit in vier Sekunden erkannt werden.

Heutige Umsetzungen der Selbsttestung des Messpfades lassen kompakte, freitastende Sicherheitssensoren ohne Ablenkeinheit nicht zu.

Tastende Sicherheitslaserscanner mit Lichtlaufzeit als Detektionsprinzip verfügen in der Regel über Testziele im Rücklaufbereich, die bei jeder Umdrehung einmal vermessen werden. In der Regel werden hierfür zwei Testflächen angebracht, wobei eine eine sehr hohe und eine eine sehr geringe Remission aufweist. In jedem Rücklauf wird z. B. die Höhe des Sendesignals, der Zeitpunkt des Sendesignals, die Höhe des Empfangssignals auf die hohe und die niedrige Remission sowie Driften, z. B. aufgrund von Temperatur getestet und gegebenenfalls korrigiert oder sicherheitsgerichtet ein Abschaltsignal ausgegeben.

Hierbei wird in der Ansprechzeit, z. B. innerhalb von ein oder zwei Umdrehungen des Laserscanners, die gesamte Messkette vollständig getestet, auch wenn sich kein Objekt im Überwachungsbereich des Scanners befindet und der Scanner damit keine Echos aus dem Messbereich erhält.

Um sicherzustellen, dass die Detektionsfähigkeit auch nicht durch Veränderungen auf der Frontscheibe eingeschränkt wird, wird zudem eine Verschmutzungsmessung der Frontscheibe integriert, die starke Transmissionsverluste durch Verschmutzung oder Manipulation erkennen kann.

Heutige sichere Lichtgitter und Lichtschranken mit gegenüberliegenden Sendern und Empfängern sind nach dem Ruhestromprinzip aufgebaut. Hierbei wird das Lichtsignal auf direktem Weg vom Sender zum Empfänger gesendet und durchläuft dabei eine komplette Messkette. Detektiert wird eine Unterbrechung dieses direkten Lichtwegs. Veränderungen des Empfangssignals, z. B. durch Frontscheibenverschmutzung, Senderdegradation, etc. zeigen sich dabei direkt in der Amplitudenhöhe des Empfangssignals und können direkt detektiert werden.

Da die sicherheitstechnische Entscheidung anhand einer Amplitudenschwelle erfolgt, kann jede kritische Verschlechterung im Messpfad erkannt und entsprechend ein Warn- oder Stoppsignal ausgegeben werden.

In einigen abstandsmessenden Sicherheitssystemen werden externe Referenzziele im Erfassungsbereich des Sensors verwendet. Die Messkette wird durch den Messwert auf dieses externe Referenzziel geprüft, wobei vor allem der Abstandswert und die Signalamplitude überprüft werden.

Möglich ist für tastende, abstandsmessende Sensoren auch die Messung auf eine bekannte Referenzkontur, wobei direkt Änderungen des Abstands- und/oder Amplitudensignals dieser Kontur detektiert und signalisiert werden.

Das Referenzziel im Rücklauf nimmt eine Menge Bauraum ein und schattet einen großen Winkelbereich ab. So ist z. B. der Scanwinkel bei bestimmten Laserscannern auf 275° beschränkt. Ein größerer Winkelbereich aufgrund der Abdeckung der Empfangsapertur durch das Referenzziel nicht möglich ist.

Für biaxiale Systeme, bei denen sich die optischen Achsen von Sende- und Empfangspfad nicht überlagern, sind einfache Testflächen als Referenzziele im Scannergehäuse zudem aufwändig zu realisieren, da sich in der Regel Sende- und Empfangskonus im Gehäuse noch nicht überlagern. Es sind deshalb aufwändigere Anordnungen mit Umlenkspiegeln notwendig.

Heutige Lösungen zur Verschmutzungsmessung nehmen ebenfalls sehr viel Bauraum ein und verursachen zusätzliche Kosten.

Bei Sensoren ohne bewegte Ablenkeinheit ist die zyklische Testung auf ein fest installiertes Testtarget nicht ohne Weiteres möglich.

Die im heutigen Lichtgitter verwendete Art der Selbsttestung nach dem Ruhestromprinzip ist bei freitastenden Lichtgittern/Lichttastern nicht anwendbar, da die direkte Gegenseite fehlt.

Bei freitastenden Systemen ist die Amplitude des Empfangssignals im Messkanal vor allem vom Abstand und der Remission des Targets abhängig, bzw. fehlt vollständig, wenn der Sensor ins "Unendliche" schaut.

Das externe Referenzziel muss im Erfassungsbereich des Sensors liegen. Dies bedingt entweder eine Ablenkeinheit ähnlich der von Scannern und eine regelmäßige Abtastung des Testziels, oder einen großen Sichtbereich, der teilweise vom externen Referenzziel eingenommen wird.
Das externe Referenzziel kann unkontrollierten Eigenschaftsänderungen unterliegen, z. B. Alterung oder Dejustage, Änderung der Remission durch Verschmutzung oder Benetzung.

In vielen Applikationen ist ein externes Referenzziel zu unflexibel oder aus Platzgründen nicht zu realisieren.
Bei einstrahligen Sensoren ist diese Lösung unpraktikabel.

Die EP 2 182 377 A1 offenbart einen entfernungsmessenden Laserscanner mit einer Avalanche Photodiode als Empfangselement.
Die EP 2 910 972 A1 offenbart einen Sensor und ein Verfahren zur Abstandsbestimmung von Objekten in einem Überwachungsbereich. Der Empfänger ist vorzugsweise eine Avalanche-Photodiode.
Die Veröffentlichung von S.Pellegrini in der Publikation 'Measurement Science and Technology' offenbart ein Laser basiertes Messsystem unter Verwendung einer Piko-Sekunden aufgelösten zeitkorrelierten Einzelphotonenzählung gemäß dem Oberbegriff des Anspruchs 1. Eine Aufgabe der Erfindung besteht darin, einen kompakten, flexibel einsetzbaren und günstigen Lichttaster bereitzustellen. Eine weitere Aufgabe besteht darin, einen günstigen Lichttaster für Sicherheitsanwendungen bereitzustellen. Weiter sollen mit Hilfe des Lichttasters kompakte oder komplizierte Geometrien abgesichert werden können. Eine weitere Aufgabe der Erfindung ist eine durchgängige Selbsttestung des gesamten Messsystems bei frei in den Raum arbeitenden Lichttastern, insbesondere Sicherheitslichttastern ohne zusätzliche Referenzziele.
Die Aufgabe wird gemäß Anspruch 1 gelöst durch einen Lichttaster nach dem Lichtlaufzeitprinzip mit mindestens einem Lichtsender, der aufeinanderfolgende Lichtimpulse in einen Messbereich aussendet und mit mindestens einem Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt, wobei der Lichtempfänger mindestens eine Einzelphotonenlawinendiode aufweist.

Einzelphotonenlawinendioden werden auch synonym als 'Single Photon Avalanche Diode' kurz SPAD bezeichnet. Andere gängige Bezeichnungen sind 'Silicon Photomultiplier' (SiPM),, 'Geigermode Avalanche Photon Diode' oder 'Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10⁶ können bereits geringste Empfangsleistungen bis zu Einzelphotonen detektiert werden.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter kann ein CW-Verfahren (Continuous Wave) bzw. das synonyme Dauerstrich-Verfahren eingesetzt werden, wobei ein zeitlich konstantes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung. Durch den Amplitudenwert kann eine Plausibilitätsprüfung, insbesondere bei sicherheitstechnischen Anwendungen durchgeführt werden.

Der erfindungsgemäße Lichttaster hat den Vorteil, dass dieser kompakt ausgestaltet ist und in einem kleinen Gehäuse untergebracht werden kann. Weiter ist der Lichttaster eine kostengünstige Alternative zu mechanischen Schutzsystemen und Ultraschallsensoren. Der Lichttaster bietet in einer Anwendung bzw. Applikation eine hohe Flexibilität zur Absicherung verschiedener Geometrien bzw. Szenarien, beispielsweise können nichtrechteckige Schutzfelder realisiert werden. Weiter können Einzelstrahlen zur Absicherung realisiert werden. Auch kleine Öffnungen oder Rundumabsicherungen können gemäß der Erfindung realisiert werden. Es ist eine Flexibilität in der Anzahl der verwendeten Sensoren, vom Einzelsensor bis zu Systemen mit vielen Sensoren mit einem zentralen Kontroller, Sicherheitskontroller oder einer Steuerung bzw. Sicherheitssteuerung. Weiter ist eine hohe Modularität gegeben, da die Anzahl und Anordnung der Lichttaster nahezu beliebig ist. Weiter ist eine hohe Variantengenerierung möglich durch verschiedene optische Varianten für unterschiedliche Reichweiten und Sichtwinkel. Weiter sind verschiedene Möglichkeiten zur sicherheitstechnischen Plausibilisierung der Messwerte möglich.

Die Verwendung von Einzelphotonenlawinendioden bietet folgende Vorteile: Einzelphotonenlawinendioden sind in einem Standard CMOS Prozess herstellbar. Damit ist der Lichttaster hoch integrierbar, z. B. als ASIC. Der Lichtsender, beispielsweise ein VSCEL, eine Laserdiode oder eine Leuchtdiode und die Steuer- und Auswerteeinheit bzw. eine getrennte Lichtsenderansteuerung sind ebenfalls auf dem Chip integrierbar.

Der Lichttaster ist kostengünstiger als bisher in der Sicherheitstechnik übliche photoempfindliche Empfänger. Durch Mehrfachanordnung von Lichttastern sind sehr kompakte Systeme möglich. Durch die Verwendung von Einzelphotonenlawinendioden ist eine hohe Empfindlichkeit bis zu einzelnen Photonen gegeben. Dadurch kann eine optionale Optik sehr kompakt ausgeführt werden.

Gemäß der Erfindung ist eine Temperaturkompensation der Lichtlaufzeit oder ein Temperaturregelung der SPAD-Vorspannung bzw. der Einzelphotonenlawinendioden-Vorspannung im Lichttaster möglich. Die Vorspannung der einzelnen Einzelphotonenlawinendioden wird vorzugsweise temperaturabhängig geregelt, um diese im Arbeitsbereich eines Geigermodes zu halten. Die Logik für die Regelung ist bevorzugt mit integriert. Weiter sind zum Betrieb der Einzelphotonenlawinendioden-Empfänger des Lichttasters nur Spannungen kleiner 50V und keine Hochspannungen notwendig. Weiter ist durch eine Auswertung von Abstand und Signalpegel eine Plausibilisierung möglich.

Der Lichtsender ist dabei optional in einer ersten Gehäusekammer und der Lichtempfänger in einer zweiten benachbarten Gehäusekammer angeordnet. Die Gehäusekammern sind optisch isoliert, so dass keine direkte optische Verbindung zwischen Lichtsender und Lichtempfänger vorhanden ist. Lediglich an einem Objekt reflektiertes bzw. remittiertes Licht des Lichtsenders gelangt auf den Lichtempfänger.

In Weiterbildung der Erfindung weist der Lichtempfänger mindestens ein Array bestehend aus Einzelphotonenlawinendioden auf.

Damit der Lichtempfänger mit der mindestens einen Einzelphotonenlawinendiode nicht bereits durch einzelne Photonen gesättigt wird, z. B. durch Fremdlicht, werden viele Einzelphotonenlawinendioden angeordnet und zusammen ausgewertet. Prinzipiell können hier die Analogsignale der Einzelphotonenlawinendioden-Pixel bzw. Einzelphotonenlawinendioden-Elemente addiert werden. Es ist auch möglich, die Lawinen jeder Einzelphotonenlawinendiode über z. B. einen Komparator oder z. B. einen Analog-Digital-Wandler zu digitalisieren und digital auszuwerten. Jedoch können auch die Lawinen jeder Einzelphotonenlawinendiode direkt digital weiterverarbeitet werden.

Um die Möglichkeit eines größeren Winkelbereichs durch den Lichttaster abzudecken und dennoch die nötige räumliche Auflösung zur Detektion z. B. eines Beines zu erhalten, kann das Einzelphotonenlawinendioden-Array in sogenannte Makropixel aufgeteilt werden. Hierbei sind mehrere räumlich benachbarte Einzelphotonenlawinendioden-Zellen einer gemeinsamen Auswertung zugehörig und werten über eine entsprechende Optik das empfangene Licht aus einem bestimmten Winkelbereich aus. Die Anordnung kann dabei linear oder flächig erfolgen.

Eine Dynamik und/oder ein Fremdlichtverhalten ist über die verschiedenen Einzelphotonenlawinendiode bzw. Einzelphotonenlawinendioden-Arrays skalierbar.

In einer Ausführungsform der Erfindung ist dem Lichtsender eine Sendeoptik, insbesondere eine Linse, vorgeordnet. Die Sendeoptik ist optional auf einem Chip oder in dem Chipgehäuse integriert, um eine kostengünstige und kompakte Lösung, insbesondere bei hohen Stückzahlen zu erreichen.

Durch eine hohe Integration und eine geringe Größe der Senderoptik ist der Lichttaster sehr kompakt.

Durch unterschiedliche Sendeoptiken können verschiedene Überwachungswinkel und verschiedene Reichweiten realisiert werden.

In einer weiteren Ausführungsform ist dem Lichtempfänger eine Empfangsoptik, insbesondere eine Linse, vorgeordnet.
Die Empfangsoptik ist optional auf einem Chip oder in dem Chipgehäuse integriert, um eine kostengünstige und kompakte Lösung, insbesondere bei hohen Stückzahlen zu erreichen.
Auch ein optischer Bandpassfilter kann direkt auf dem Chip oder dem Lichtempfänger angeordnet, insbesondere aufgedampft werden, um Hintergrundlicht abzuschwächen.
Durch eine hohe Integration und eine geringe Größe der Empfängeroptik ist der Lichttaster sehr kompakt.
Durch unterschiedliche Empfangsoptiken können verschiedene Überwachungswinkel und verschiedene Reichweiten realisiert werden. Gemäß der Erfindung ist ein weiterer Lichtempfänger als Referenzlichtempfänger als zweiter Empfangskanal zur sicherheitsgerichteten Selbsttestung vorgesehen.
Der Referenzlichtempfänger ist in derselben Gehäusekammer angeordnet wie der Lichtsender und ist durch eine Kanaltrennung vom Lichtempfänger getrennt. Der Referenzlichtempfänger kann dabei identisch wie der Lichtempfänger ausgebildet sein. Insbesondere kann es sich bei dem Referenzlichtempfänger um ein Einzelphotonenlawinendioden-Array handeln.
Der Referenzlichtempfänger ermöglicht folgende Selbsttestungen.
Erstens kann über Streulicht innerhalb der Gehäusekammer des Lichttasters im Referenzlichtempfänger die Leistung, insbesondere Laserleistung des Lichtsenders in jedem Messzyklus überwacht werden. Große Abweichungen oder ein Ausfall des Lichtsenders können so erkannt werden.
Zweitens kann das genaue Zeitverhalten bzw. Timing des Lichtsenders überwacht werden und eventuell auftretende Offsets können korrigiert werden, z. B. bei Temperatureinflüssen.

Drittens kann eine verschmutzte Frontscheibe des Lichttasters über eine Änderung des Frontscheibenechos durch Rückstreuung an den Schmutzpartikeln auf der Frontscheibe detektiert werden.

Viertens sind Manipulationsversuche ebenfalls über die Rückstreuung zum Referenzlichtempfänger erkennbar, auch wenn der Lichtempfänger kein Signal erhält. Fünftens kann in den Phasen, in denen kein Licht ausgesendet wird, an dem Referenzlichtempfänger der Fremdlichtpegel gemessen werden. Das entsprechende Messsignal kann mit dem Signal des Lichtempfängers verglichen werden, wodurch die Sensitivität des Lichtempfängers verifiziert werden und mit optionaler anderer Skalierung zur Überprüfung des nötigen Signal-Rausch-Abstandes im eigentlichen Messkanal herangezogen werden kann.

Zusätzliche Messwerte, welche auf dem Lichtempfänger und dem Referenzlichtempfänger erzeugt werden, erlauben eine sicherheitstechnische Bewertung der Funktionstüchtigkeit.
Eine direkte Messung des Fremdlichtpegels auf dem Lichtempfänger und ggf. auf dem Referenzlichtempfänger ermöglichen eine gute Bestimmung des Signal-Rausch-Verhältnisses und ermöglichen eine sicherheitsgerichtete Empfindlichkeit des Systems. Gemäß der Erfindung ist ein weiterer Lichtsender als Referenzlichtsender zur sicherheitsgerichteten Selbsttestung vorgesehen.
Weiter kann auch ein Referenzlichtsender als zweiter Lichtsender vorgesehen werden.
Der Referenzlichtsender kann zur Testung des Lichtempfängers in der Gehäusekammer des Lichtempfängers integriert werden. Hierdurch kann eine Testung des Empfangskanals auf das Zeitverhalten bzw. Timing sowie signalhöhenabhängige Effekte durchgeführt werden. Der Referenzlichtsender ist hier bevorzugt nahe am Lichtempfänger angebracht und kann beispielsweise ebenfalls in CMOS integriert werden.

Aufgrund der räumlichen Nähe lässt sich der zusätzliche Referenzlichtsender mit einem leistungsschwächeren und damit kostengünstigeren Lichtsender realisieren. Die Sendeleistung des Referenzlichtsenders wird so eingestellt, dass die Signalhöhe den tatsächlichen Empfangssignalen des Lichtempfängers entspricht. Gleiches gilt für den zeitlichen Verlauf des Sendesignals des Referenzlichtsenders.

Zur Testung des Lichtempfängers können optische Testpulse mit unterschiedlichen zeitlichen Verläufen und Amplituden verwendet werden und über ein steuerbares Delay kann relativ zum Startzeitpunkt der Messung eine Lichtlaufzeit imitiert werden.

Insbesondere Übersteuerungsmessungen lassen sich auf diese Art leicht durchführen. Über eine programmierbare variable Verzögerung vor dem Lichtsender lässt sich das Zeitverhalten, also das Timing der Entfernungsmesskette testen.

Über eine einstellbare Signalhöhe des Lichtsenders lässt sich die Dynamik des Lichtempfängers testen. Der Referenzlichtsender lässt sich mit einer leistungsschwächeren und damit kostengünstigeren Sendediode aufbauen, da aufgrund der räumlichen Nähe eine geringere Sendeleistung ausreicht, um vergleichbare Signale auf dem Empfänger zu erzeugen. Der Referenzlichtsender kann ebenfalls in CMOS-Technologie integriert werden.

Damit ermöglicht der Referenzlichtsender folgende Testungen:
Erstens kann eine Linearität und eine Integrität der Empfangssignale des Lichtempfängers für verschiedene Verzögerungen bzw. Lichtlaufzeiten gewährleistet werden. Damit kann indirekt die Abstandsmessung überprüft werden.

Zweitens kann durch Messung der Signalhöhe mit unterschiedlichen Referenzamplituden die Dynamik und die Sensitivität des Lichtempfängers überprüft werden. Die Messungen können auch zur Kompensation von Alterungseffekten oder Degration oder zur Kompensation von Temperatureffekten verwendet werden. Im Lichttaster werden hierfür beispielsweise zwei Referenzziele angeordnet und die entsprechenden Messsignale zyklisch einmal gemessen werden.

Drittens können z. B. bei Bedarf Übersteuerungsmessungen durchgeführt werden.

In einer bevorzugten Ausführung der Erfindung weist der Lichttaster ein Gehäuse auf, und mehrere Lichttaster sind über flexible Verbindungsleitungen miteinander verbindbar.

Als Basis für den Lichttaster dient ein modularer Aufbau. Der Lichttaster weist beispielsweise die Komponenten auf: Optikmodul mit Sendeoptik und Empfangsoptik, Messkern mit Lichtsender und Lichtempfänger und/oder Backend mit Steuer- und Auswerteeinheit, I/O-Treibern, Businterface und/oder Sicherheitssteuerung.

Der Messkern besteht bevorzugt aus einem hochintegrierten CMOS-ASIC. Ein Aufbau aus diskreten Bauteilen ist jedoch ebenfalls möglich.

Aufgrund der guten Richtcharakteristik von Licht lassen sich so durch entsprechende Optikmodule verschiedene Varianten des Lichttasters mit unterschiedlichen Öffnungswinkeln und Reichweiten realisieren, welche auf verschiedene Anforderungen unterschiedlicher Anwendungen angepasst sind.

Gemäß der Erfindung können Lichtsender und Lichtempfänger ohne Sendeoptik und Empfangsoptik betrieben werden, wodurch ein großer Öffnungswinkel und eine geringe Reichweite erreicht wird. Jedoch können die Lichtstrahlen auch durch optische Elemente kollimiert oder weiter aufgeweitet werden.

Zur Einschränkung des Fremdlichteinfalls kann der Lichtempfänger mit einem Filterelement, beispielsweise mit einem Bandpassfilter versehen werden.

In Weiterbildung der Erfindung ist die Steuer- und Auswerteeinheit zweikanalig ausgebildet.

Durch die zweikanalige Steuer- und Auswerteeinheit kann der Lichttaster als eigenständiger Sicherheitssensor bzw. Sicherheitslichttaster verwendet werden.

Dadurch ist der Lichttaster selbst in der Lage, eine Vielzahl von Selbsttests durchzuführen und seine eigene Funktionalität umfassend sicher zu stellen.

Weiter können aber auch mehrere Lichttaster über einen gemeinsamen Bus kommunizieren und ein zentraler Sicherheitskontroller bzw. Safetycontroller wird verwendet, um die einzelnen Lichttaster zu konfigurieren, ihren Zustand abzufragen und gegebenenfalls geeignete Testsignale einzuspeisen, die empfangenen Signale auszuwerten und abzugleichen, Warnungen zu signalisieren und im Gefährdungsfall eine abzusichernde Maschine oder ein abzusicherndes selbstfahrendes Fahrzeug anzuhalten.

Es kann beispielsweise ausreichen, wenn jeder einzelne Lichttaster auf dem gemeinsamen Bus lediglich meldet, wenn seine Messwerte zuvor eingelernte Schwellen verletzen bzw. überschreiten oder bei einer Selbstdiagnose ein Problem diagnostiziert hat.

In einer Ausführung der Erfindung ist eine Mehrzahl von Lichttastern auf einem flexiblen Träger angeordnet. Der flexible Träger kann von einem Anwender nach Bedarf angeordnet und abgelängt werden. Die Leitungen für die Versorgung sowie für das Bussystem zum Datenaustausch sind in dem flexiblen Träger bzw. flexiblen Trägerband integriert. Bei dem flexiblen Träger kann es sich um einen einstückigen Kunststoff oder beispielsweise um kettengliederähnliche Teile handeln.

In Weiterbildung der Erfindung ist ein Lagesensor zur Auswertung der Sensorlage des Lichttasters vorgesehen. Insbesondere ist eine sicherheitsrelevante Ausrichtung des Lichttasters vorgesehen.

Ist der einzelne Lichttaster vom Anwender positioniert und überwacht den gewünschten Bereich, kann es notwendig sein, diese Position des Überwachungsbereichs zu kontrollieren, um z. B. eine Dejustage des Sensors durch mechanische Einwirkungen zu erkennen. Beispielsweise wird als Lagesensor ein MEMS-Lagesensor verwendet. MEMS steht für Mikro-Elektro-Mechanisches System.

Diese Lagesensoren sind heute dank hoher Stückzahlen in Consumer- und Automotivebereichen sehr günstig verfügbar und hochintegriert. Nachdem die Position einmal eingelernt wurde, erkennt der Lagesensor jede Veränderung und ein nachgeschalteter Sicherheitskontroller bzw. Safetycontroller bzw. eine nachgeschaltete Sicherheitssteuerung wertet die Positionssignale aus, falls sich durch eine Dejustage ein Sicherheitsproblem ergibt.

Zudem kann der Lagesensor als Ausrichthilfe bzw. elektronische Wasserwaage dienen, was insbesondere bei der Justage eines Sensorsystems mit vielen Einzellichttastern oder eines Systems am flexiblen Träger hilfreich ist.

In Weiterbildung der Erfindung ist der Lichttaster ein integriertes Lichttastermodul.

Durch die Verwendung eines CMOS-Prozesses ist es möglich, zusätzliche Komponenten wie die Steuer- und Auswerteeinheit, den Lasertreiber, die Spannungsversorgung und/oder eine Temperaturregellogik zusammen mit dem photoempfindlichen Empfänger auf einem Chip zu integrieren. Mit dieser Technologie lassen sich alle Komponenten der Messkette des Lichttasters in einem einzigen ASIC integrieren. Der ASIC ist in der Lage, eigenständig Entfernungswerte zu messen und das Endergebnis über einen geeigneten Bus an die zentrale Steuerung weiterzugeben.

Mittels einer Hybridtechnologie lässt sich auch der Lichtsender, beispielsweise ein Laser, eine VCSEL oder eine Leuchtdiode mit auf dem integrierten Lichttastermodul, nämlich dem Chip integrieren. Auch der Referenzlichtempfänger und/oder der Referenzlichtsender können in dem integrierten Lichttastermodul vorgesehen werden.

Weiter ist gemäß der Erfindung ein selbstfahrendes Transportsystem mit einer Mehrzahl von Lichttastern vorgesehen.

Neben stationären Absicherungen ist eine Mehrzahl von Lichttastern in mobilen Anwendungen einsetzbar. Insbesondere zur Absicherung von selbstfahrenden Transportsystemen. Die Mehrzahl von Lichttastern bildet dabei gemeinsam ein Sensorsystem. Beispielsweise werden in einer Hauptbewegungsrichtung mit einer größten Geschwindigkeit des selbstfahrenden Transportsystems eng kollimierte Sensoren verwendet, um eine große Reichweite bei geringer Ansprechzeit zu erhalten. Die Lichttaster können dabei in mehreren Reihen matrixförmig angeordnet sein. An einer Seite des selbstfahrenden Transportsystems werden Lichttaster mit einem größeren Erfassungswinkel und einer kleineren Reichweite verwendet, um einen breiteren Bereich abzudecken. Die geringere Reichweite ist aufgrund der geringeren Geschwindigkeitskomponente akzeptabel. Eine gemeinsame Busleitung verbindet die Lichttaster und ist an eine Sicherheitssteuerung bzw. einen Safetycontroller angeschlossen.

In Weiterbildung der Erfindung sind mehrere Lichttaster kreisförmig angeordnet, um einen Messbereich von 90°, 180°, 270° oder 360° zu erfassen. Im Fall von 360° sind die Lichttaster vollkreisförmig angeordnet.

Dadurch wird ein Laserscanner gebildet, der ohne mechanisch bewegliche Teile wie ein Umlenkspiegel auskommt. Die Lichtstrahlen werden ausgehend von einem quasi gemeinsamen Ursprung fächerförmig ausgesendet, so dass ausgehend von einem kompakten Gehäuse mit den Lichttastern ein ringförmiges oder teilringförmiges Schutzfeld, Überwachungsfeld oder ein Messbereich überwacht wird. Die Lichttaster sind dabei in einer oder mehreren Reihen angeordnet.

Interessant für einen Sicherheitssensor ist die Möglichkeit einer Hintergrundlichtmessung im Einzelphotonenlawinendioden-Array. Das Fremdlicht ist bei einem Einzelphotonenlawinendiode über das 'Shot-Noise' eine dominierende Rauschquelle. Das thermische Rauschen ist gegenüber klassischen Photodioden-Empfängern deutlich kleiner, da der im klassischen Empfangspfad übliche Transimpedanzwandler, der eine Hauptquelle für thermisches Rauschen darstellt, nicht benötigt wird.

Auf dem Einzelphotonenlawinendioden-Array lässt sich in den Sendepausen des Messsystems der Fremdlichtpegel über die Anzahl der einfallenden Fremdlichtphotonen auf dem Lichtempfänger bestimmen. Z. B. im Fall des angeführten CW-Verfahren durch ein weiteres Gatingsignal, welches in den entsprechenden Sendepausen die Einzelphotonenevents in einem Zähler aufaddiert.

Für eine sichere Detektion von Objekten in einem sicheren Lichttaster kann zuvor ein nötiges Signal-Rausch-Verhältnis definiert werden, bei welchem unter allen Umständen ein Objekt erkannt werden muss. Durch die Bestimmung des Fremdlichtpegels während des Messzyklus kann überwacht werden, ob der Rauschpegel im Vergleich zu einem erwarteten Signal vom eingreifenden Objekt zu groß wird und entsprechend sicherheitsgerichtet abgeschaltet werden muss.

Der Lichttaster kann zur kostengünstigen und kompakten Absicherung von Servicerobotern eingesetzt werden. Weiter kann der Lichttaster zur stationären Absicherung von Anlagen und Maschinen eingesetzt werden. Mit einer Mehrzahl von Lichttastern können verschiedene Geometrien von Messbereichen, z. B. kleine Maschinenöffnungen oder Sägeblätter abgesichert werden. Weiter ist mit dem Lichttaster eine punktuelle Nahbereichsabsicherung, z. B. an Maschinen und Robotern möglich. Weiter können Türen und Durchgänge abgesichert werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen erfindungsgemäßen Lichttaster;
- Figur 2: eine erste Gehäusekammer des Lichttasters;
- Figur 3: eine erste Gehäusekammer des Lichttasters;
- Figur 4: eine erste Gehäusekammer des Lichttasters;
- Figur 5: eine zweite Gehäusekammer des Lichttasters;
- Figur 6: einen Lichttaster mit einem Bandpassfilter;
- Figur 7: einen Lichttaster mit einer Schnittstelle;
- Figur 8: mehrere Lichttaster, die über eine Busleitung miteinander verbunden sind;
- Figur 9: einen Lichttaster mit einem Einzelphotonenlawinendiode-Array;
- Figur 10: ein selbstfahrendes Transportsystem mit angeordneten Lichttastern.

In den nachfolgenden Figuren sind identische Teile mit identischen Bezugszeichen versehen.

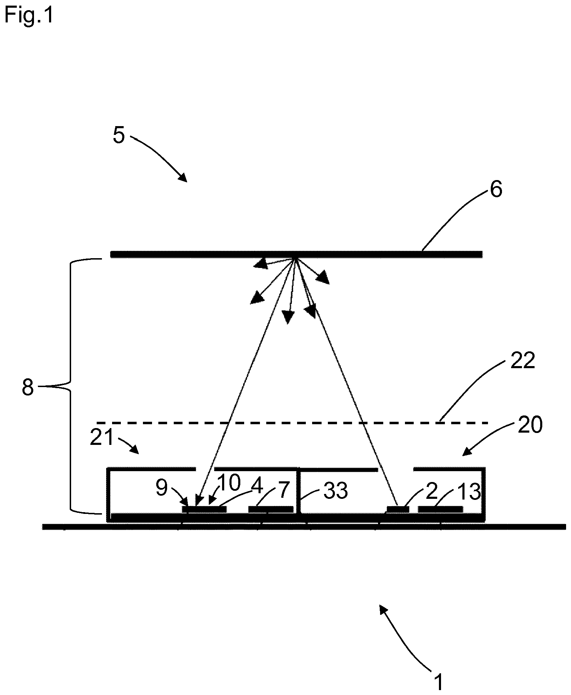

Figur 1 zeigt Lichttaster 1 nach dem Lichtlaufzeitprinzip mit mindestens einem Lichtsender 2, der aufeinanderfolgende Lichtimpulse 3 in einen Messbereich 5 aussendet und mit mindestens einem Lichtempfänger 4, welcher die an einem Objekt 6 im Messbereich 5 zurückgeworfenen Lichtimpulse 3 aufnimmt und in Form von elektrischen Empfangssignalen einer Steuer- und Auswerteeinheit 7 zuführt, die unter Berücksichtigung der Lichtgeschwindigkeit aus der Zeit zwischen Aussendung und Empfang des Lichtimpulses 3 ein für den Abstand 8 des Objektes 6 zum Lichttaster 1 repräsentatives Abstandssignal ermittelt, wobei der Lichtempfänger 4 mindestens eine Einzelphotonenlawinendiode 9 aufweist.

Zur Entfernungsmessung sind verschiedene Lichtlaufzeitverfahren mit einer entsprechenden Auswertung implementierbar.

Es kann ein Pulsverfahren vorgesehen sein. Weiter kann ein CW-Verfahren (Continuous Wave) bzw. das synonyme Dauerstrich-Verfahren eingesetzt werden, wobei ein zeitlich konstantes Lichtsignal eingesetzt wird.

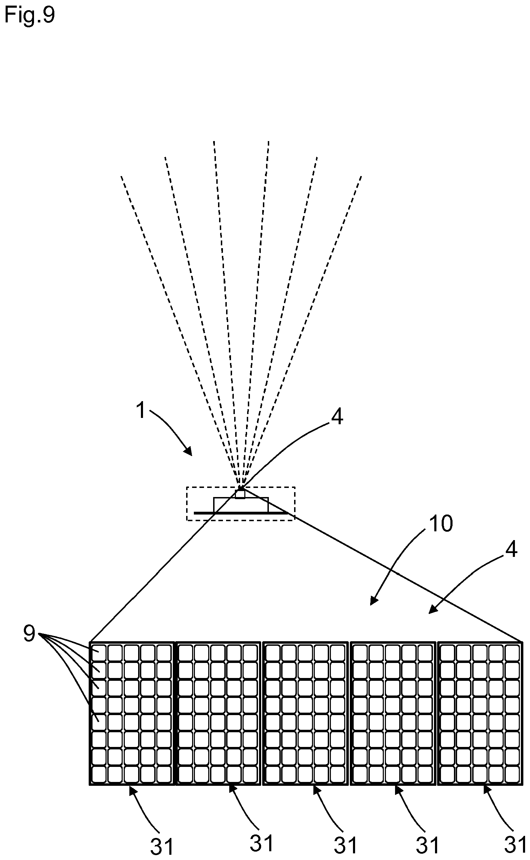

Weiter können analoge Signale der Einzelphotonendiode 9 bzw. des Einzelphotonendiodenarrays 10 ausgewertet werden. Ein Einzelphotonendiodenarray 10 ist in Figur 9 dargestellt. Die analogen Signale werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung.

Der Lichtsender 2 ist dabei gemäß Figur 1 optional in einer ersten Gehäusekammer 20 angeordnet und der Lichtempfänger 4 in einer zweiten benachbarten Gehäusekammer 21 angeordnet. Die Gehäusekammern 20, 21 sind optisch mit einer Kanaltrennung 33 isoliert, so dass keine direkte optische Verbindung zwischen Lichtsender 2 und Lichtempfänger 4 vorhanden ist. Lediglich an einem Objekt 6 reflektiertes bzw. remittiertes Licht des Lichtsenders 2 gelangt auf den Lichtempfänger 4. Gemäß Figur 1 ist der Lichttaster 1 ein integriertes Lichttastermodul.

Optional weist der Lichtempfänger 4 mindestens ein Array 10 bestehend aus Einzelphotonenlawinendioden 9 auf.

Damit der Lichtempfänger 4 mit der mindestens einen Einzelphotonenlawinendiode 9 nicht bereits durch einzelne Photonen gesättigt wird, z. B. durch Fremdlicht, werden viele Einzelphotonenlawinendioden 9 angeordnet und zusammen ausgewertet. Prinzipiell können hier die Analogsignale der Einzelphotonenlawinendioden-Pixel bzw. Einzelphotonenlawinendioden-Elemente addiert werden. Es ist auch möglich, die Lawinen jeder Einzelphotonenlawinendiode 9 über einen Analog-Digital-Wandler zu digitalisieren und digital auszuwerten.

Um die Möglichkeit eines größeren Winkelbereichs durch den Lichttaster 1 abzudecken und dennoch die nötige räumliche Auflösung zur Detektion z. B. eines Beines zu erhalten, kann das Einzelphotonenlawinendioden-Array 10 in sogenannte Makropixel 31 aufgeteilt werden, wie in Figur 9 dargestellt. In Figur 9 ist das Einzelphotonenlawinendioden-Array 10 als Ausschnitt vergrößert dargestellt. Hierbei sind mehrere räumlich benachbarte Einzelphotonenlawinendioden-Zellen einer gemeinsamen Auswertung zugehörig und werten über eine entsprechende Optik das empfangene Licht aus einem bestimmten Winkelbereich aus. Die Anordnung kann dabei linear oder flächig erfolgen.

Eine Dynamik und/oder ein Fremdlichtverhalten ist über die verschiedenen Einzelphotonenlawinendioden 9 bzw. Einzelphotonenlawinendioden-Array 10 skalierbar.

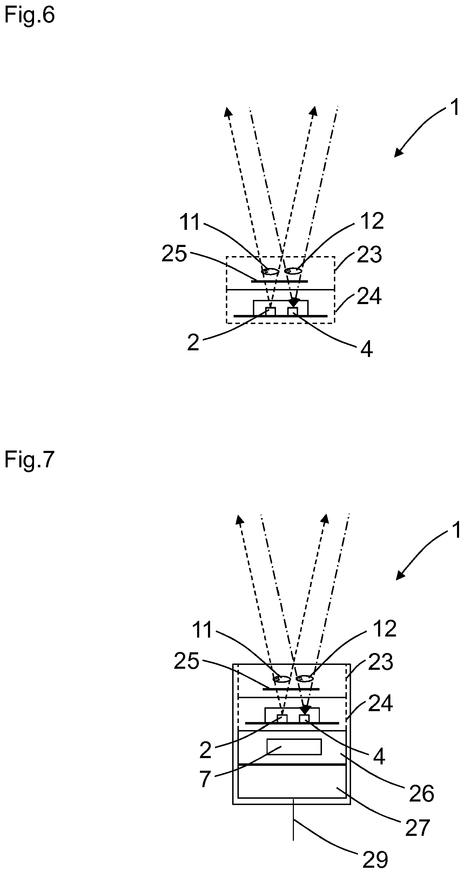

Gemäß Figur 6 ist dem Lichtsender 2 eine Sendeoptik 11, insbesondere eine Linse vorgeordnet. Die Sendeoptik 11 ist optional auf einem Chip oder in dem Chipgehäuse integriert, um eine kostengünstige und kompakte Lösung, insbesondere bei hohen Stückzahlen zu erreichen.

Durch unterschiedliche Sendeoptiken 11 können verschiedene Überwachungswinkel und verschiedene Reichweiten realisiert werden.

Gemäß Figur 6 ist dem Lichtempfänger 4 eine Empfangsoptik 12, insbesondere eine Linse, vorgeordnet.

Die Empfangsoptik 12 ist optional auf einem Chip oder in dem Chipgehäuse integriert.

Auch ein optischer Bandpassfilter 25 kann direkt auf dem Chip oder dem Lichtempfänger angeordnet, insbesondere aufgedampft werden, um Hintergrundlicht abzuschwächen.

Durch unterschiedliche Empfangsoptiken 12 können verschiedene Überwachungswinkel und verschiedene Reichweiten realisiert werden.

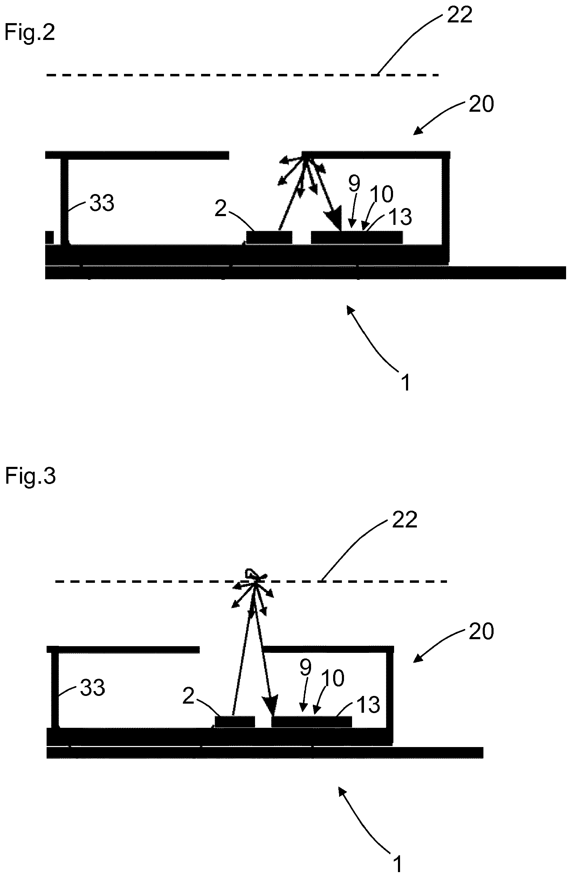

Gemäß Figur 2 ist ein weiterer Lichtempfänger als Referenzlichtempfänger 13 als zweiter Empfangskanal zur sicherheitsgerichteten Selbsttestung vorgesehen.

Der Referenzlichtempfänger 13 ist in derselben Gehäusekammer 20 angeordnet wie der Lichtsender 2 und ist durch eine Kanaltrennung 33 vom Lichtempfänger 4 getrennt. Der Referenzlichtempfänger 13 kann dabei identisch wie der Lichtempfänger 4 ausgebildet sein. Insbesondere kann es sich bei dem Referenzlichtempfänger 13 um ein Einzelphotonenlawinendioden-Array 10 handeln.

Der Referenzlichtempfänger 13 ermöglicht verschiedene Selbsttestungen.

Erstens kann über Streulicht innerhalb der Gehäusekammer 20 des Lichttasters 1 im Referenzlichtempfänger 13 die Leistung, insbesondere Laserleistung, des Lichtsenders 2 in jedem Messzyklus überwacht werden. Große Abweichungen oder ein Ausfall des Lichtsenders 2 können so erkannt werden.

Zweitens kann das genaue Zeitverhalten bzw. Timing des Lichtsenders 2 überwacht werden und eventuell auftretende Offsets können korrigiert werden, z. B. bei Temperatureinflüssen.

Drittens kann wie in Figur 3 dargestellt eine verschmutzte Frontscheibe 22 des Lichttasters 1 über eine Änderung des Frontscheibenechos durch Rückstreuung an den Schmutzpartikeln auf der Frontscheibe 22 detektiert werden.

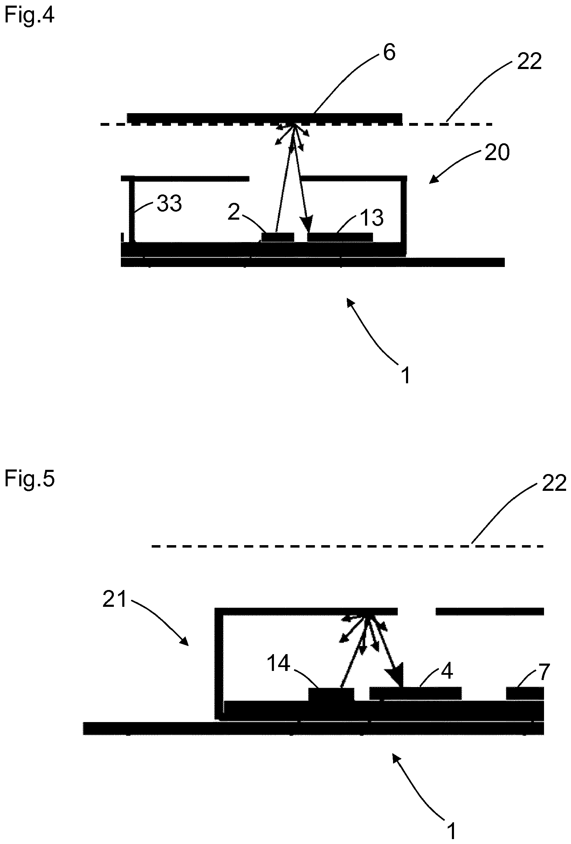

Viertens sind Manipulationsversuche, wie in Figur 4 dargestellt, ebenfalls über die Rückstreuung zum Referenzlichtempfänger 13 erkennbar, auch wenn der Lichtempfänger 4 kein Signal erhält. Gemäß Figur 4 ist vor der Frontscheibe ein manipuliertes Objekt 6 angeordnet.

Fünftens kann in den Phasen, in denen kein Licht ausgesendet wird, an dem Referenzlichtempfänger 13 der Fremdlichtpegel gemessen werden. Das entsprechende Messsignal kann mit dem Signal des Lichtempfängers 4 verglichen werden, wodurch die Sensitivität des Lichtempfängers 4 verifiziert werden und mit optionaler anderer Skalierung zur Überprüfung des nötigen Signal-Rausch Abstandes im eigentlichen Messkanal herangezogen werden kann.

Zusätzliche Messwerte, welche auf dem Lichtempfänger 4 und dem Referenzlichtempfänger 13 erzeugt werden, erlauben eine sicherheitstechnische Bewertung der Funktionstüchtigkeit.

Eine direkte Messung des Fremdlichtpegels auf dem Lichtempfänger 4 und ggf. auf dem Referenzlichtempfänger 13 ermöglicht eine gute Bestimmung des Signal-Rausch-Verhältnisses und eine sicherheitsgerichtete Empfindlichkeit des Systems.

Gemäß Figur 5 ist ein weiterer Lichtsender als Referenzlichtsender 14 zur sicherheitsgerichteten Selbsttestung vorgesehen.

Der Referenzlichtsender 14 kann zur Testung des Lichtempfängers 4 in der Gehäusekammer 21 des Lichtempfängers 4 integriert werden. Hierdurch kann eine Testung des Empfangskanals auf das Zeitverhalten bzw. Timing sowie signalhöhenabhängige Effekte durchgeführt werden. Der Referenzlichtsender 14 ist hier bevorzugt nahe am Lichtempfänger 4 angebracht und kann beispielsweise ebenfalls in CMOS integriert werden.

Aufgrund der räumlichen Nähe lässt sich der zusätzliche Referenzlichtsender 14 mit einem leistungsschwächeren und damit kostengünstigeren Lichtsender realisieren. Die Sendeleistung des Referenzlichtsenders 14 wird so eingestellt, dass die Signalhöhe den tatsächlichen Empfangssignalen des Lichtempfängers 4 entspricht. Gleiches gilt für den zeitlichen Verlauf des Sendesignals des Referenzlichtsenders 14.

Zur Testung des Lichtempfängers 4 können optische Testpulse mit unterschiedlichen zeitlichen Verläufen und Amplituden verwendet werden und über ein steuerbares Delay kann relativ zum Startzeitpunkt der Messung eine Lichtlaufzeit imitiert werden.

Insbesondere Übersteuerungsmessungen lassen sich auf diese Art leicht durchführen. Über eine programmierbare variable Verzögerung vor dem Lichtsender 2 lässt sich das Zeitverhalten, also das Timing der Entfernungsmesskette, testen.

Über eine einstellbare Signalhöhe des Lichtsenders 2 bzw. Referenzlichtsender 14 lässt sich die Dynamik des Lichtempfängers 4 testen. Der Referenzlichtsender 14 lässt sich mit einer leistungsschwächeren und damit kostengünstigeren Sendediode aufbauen, da aufgrund der räumlichen Nähe eine geringere Sendeleistung ausreicht, um vergleichbare Signale auf dem Lichtempfänger 4 zu erzeugen. Der Referenzlichtsender kann ebenfalls in CMOS-Technologie integriert werden.

Damit ermöglicht der Referenzlichtsender 14 folgende Testungen:
Erstens kann eine Linearität und eine Integrität der Empfangssignale des Lichtempfängers 4 für verschiedene Verzögerungen bzw. Lichtlaufzeiten gewährleistet werden. Damit kann indirekt die Abstandsmessung überprüft werden.

Zweitens kann durch Messung der Signalhöhe mit unterschiedlichen Referenzamplituden die Dynamik und die Sensitivität des Lichtempfängers 4 überprüft werden. Die Messungen können auch zur Kompensation von Alterungseffekten oder Degradation oder zur Kompensation von Temperatureffekten verwendet werden. Im Lichttaster 1 werden hierfür beispielsweise zwei Referenzziele angeordnet und die entsprechenden Messsignale zyklisch einmal gemessen werden.

Drittens können z. B. bei Bedarf Übersteuerungsmessungen durchgeführt werden.

Hier kann es sich vorteilhaft auswirken, wenn Sende- und Empfangskonus einen moderaten Öffnungswinkel aufweisen und diffus reflektierende Objekte im Messbereich aus energetischen Gründen nicht detektiert werden, während Reflektoren ausreichend Signale für eine Erkennung liefern. Dies hat den Vorteil, dass sich die Anforderungen an die beherrschbare Dynamik des Lichtlaufzeit-Messsystems mit dem Lichtsender 2 und dem Lichtempfänger 4 deutlich reduzieren.

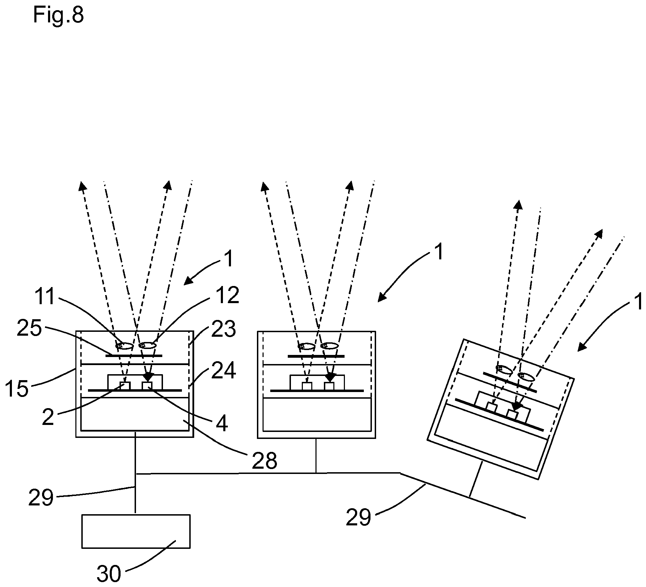

Gemäß Figur 8 weist der Lichttaster 1 ein Gehäuse 15 auf, und mehrere Lichttaster sind über flexible Verbindungsleitungen, insbesondere eine Busleitung 29, miteinander verbindbar.

Als Basis für den Lichttaster 1 dient ein modularer Aufbau wie in Figur 6 bis Figur 8 dargestellt. Der Lichttaster 1 weist beispielsweise die Komponenten auf: Optikmodul 23 mit Sendeoptik 11 und Empfangsoptik 12, Messkern 24 mit Lichtsender 2 und Lichtempfänger 3 und/oder Backend 26 mit Steuer- und Auswerteeinheit 7, I/O-Treibern, Businterface 28 und/oder Sicherheitssteuerung bzw. Sicherheitskontroller 30.

Der Messkern 24 besteht bevorzugt aus einem hochintegrierten CMOS-ASIC. Ein Aufbau aus diskreten Bauteilen ist jedoch ebenfalls möglich.

Aufgrund der guten Richtcharakteristik von Licht lassen sich so durch entsprechende Optikmodule 23 verschiedene Varianten des Lichttasters 1 mit unterschiedlichen Öffnungswinkeln und Reichweiten realisieren, welche auf verschiedene Anforderungen unterschiedlicher Anwendungen angepasst sind.

Gemäß Figur 1 können Lichtsender 2 und Lichtempfänger 4 ohne Sendeoptik und Empfangsoptik betrieben werden, wodurch ein großer Öffnungswinkel und eine geringe Reichweite erreicht wird. Jedoch können die Lichtstrahlen auch durch optische Elemente kollimiert oder weiter aufgeweitet werden.

Zur Einschränkung des Fremdlichteinfalls kann der Lichtempfänger 4 mit einem Filterelement, beispielsweise mit einem Bandpassfilter 25, versehen werden.

Die Steuer- und Auswerteeinheit 7 ist optional zweikanalig ausgebildet.

Durch die zweikanalige Steuer- und Auswerteeinheit 7 kann der Lichttaster 1 als eigenständiger Sicherheitssensor bzw. Sicherheitslichttaster verwendet werden.

Dadurch ist der Lichttaster 1 selbst in der Lage, eine Vielzahl von Selbsttests durchzuführen und seine eigene Funktionalität umfassend sicher zu stellen.

Weiter können, wie in Figur 8 dargestellt, aber auch mehrere Lichttaster 1 über einen gemeinsamen Bus kommunizieren und ein zentraler Sicherheitskontroller 30 bzw. Safetycontroller wird verwendet, um die einzelnen Lichttaster 1 zu konfigurieren, ihren Zustand abzufragen und gegebenenfalls geeignete Testsignale einzuspeisen, die empfangenen Signale auszuwerten und abzugleichen, Warnungen zu signalisieren und im Gefährdungsfall eine abzusichernde Maschine oder ein abzusicherndes selbstfahrendes Transportsystem oder Fahrzeug anzuhalten.

Es kann beispielsweise ausreichen, wenn jeder einzelne Lichttaster 1 auf dem gemeinsamen Bus lediglich meldet, wenn seine Messwerte zuvor eingelernte Schwellen verletzen bzw. überschreiten oder bei einer Selbstdiagnose ein Problem diagnostiziert hat.

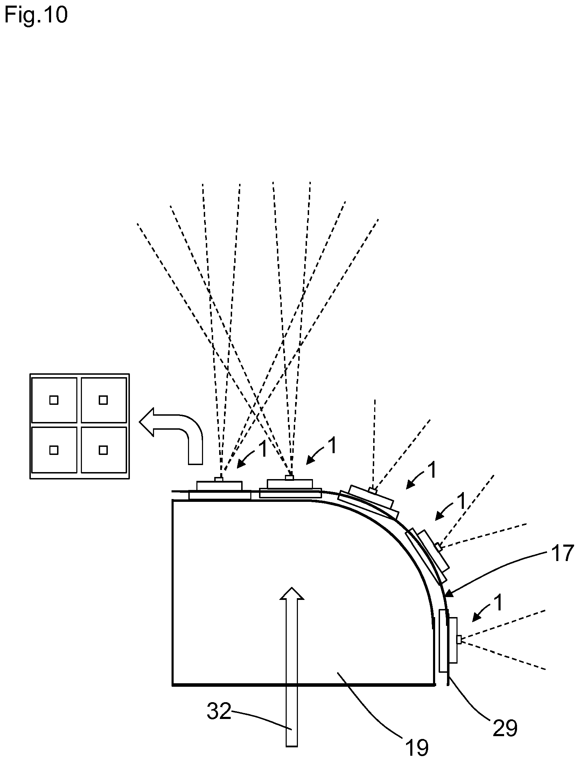

Gemäß Figur 10 ist eine Mehrzahl von Lichttastern auf einem flexiblen Träger angeordnet. Der flexible Träger 17 kann von einem Anwender nach Bedarf angeordnet und abgelängt werden. Die Leitungen für die Versorgung sowie für das Bussystem zum Datenaustausch sind in dem flexiblen Träger 17 bzw. flexiblen Trägerband integriert. Bei dem flexiblen Träger 17 kann es sich um einen einstückigen Kunststoff oder beispielsweise um kettengliederähnliche Teile handeln.

Optional ist ein Lagesensor zur Auswertung der Sensorlage des Lichttasters 1 vorgesehen. Insbesondere ist eine sicherheitsrelevante Ausrichtung des Lichttasters 1 vorgesehen.

Ist der einzelne Lichttaster 1 vom Anwender positioniert und überwacht den gewünschten Bereich, kann es notwendig sein, diese Position des Überwachungsbereichs zu kontrollieren um z. B. eine Dejustage des Lichttasters 1 durch mechanische Einwirkungen zu erkennen. Beispielsweise wird als Lagesensor ein MEMS-Lagesensor verwendet.

Nachdem die Position einmal eingelernt wurde, erkennt der Lagesensor jede Veränderung und ein nachgeschalteter Sicherheitskontroller bzw. Safetycontroller bzw. eine nachgeschaltete Sicherheitssteuerung wertet die Positionssignale aus, falls sich durch eine Dejustage ein Sicherheitsproblem ergibt.

Zudem kann der Lagesensor als Ausrichthilfe bzw. elektronische Wasserwaage dienen, was insbesondere bei der Justage eines Sensorsystems mit vielen Einzellichttastern oder eines Systems am flexiblen Träger hilfreich ist.

Gemäß Figur 10 ist ein selbstfahrendes Transportsystem 19 mit einer Mehrzahl von Lichttastern 1 vorgesehen.

Neben stationären Absicherungen ist eine Mehrzahl von Lichttastern 1 in mobilen Anwendungen einsetzbar. Insbesondere zur Absicherung von selbstfahrenden Transportsystemen 19. Die Mehrzahl von Lichttastern 1 bilden dabei gemeinsam ein Sensorsystem. Beispielsweise werden in einer Hauptbewegungsrichtung 32 mit einer größten Geschwindigkeit des selbstfahrenden Transportsystems 19 eng kollimierte Sensoren verwendet, um eine große Reichweite bei geringer Ansprechzeit zu erhalten. Die Lichttaster 1 können dabei in mehreren Reihen matrixförmig angeordnet sein, wie in Figur 10 in einem Ausschnitt vergrößert dargestellt. An einer Seite des selbstfahrenden Transportsystems 19 werden Lichttaster 1 mit einem größeren Erfassungswinkel und einer kleineren Reichweite verwendet, um einen breiteren Bereich abzudecken. Die geringere Reichweite ist aufgrund der geringeren Geschwindigkeitskomponente akzeptabel. Eine gemeinsame Busleitung 29 verbindet die Lichttaster 1 und stellt eine Verbindung zu einer Sicherheitssteuerung bzw. einem Safetycontroller her.

Gemäß einem nicht dargestellten Ausführungsbeispiel sind mehrere Lichttaster kreisförmig angeordnet, um einen Messbereich von 90°, 180°, 270° oder 360° zu erfassen. Im Fall von 360° sind die Lichttaster vollkreisförmig angeordnet.

Dadurch wird ein Laserscanner gebildet, der ohne mechanisch bewegliche Teile wie ein Umlenkspiegel auskommt. Die Lichtstrahlen werden ausgehend von einem quasi gemeinsamen Ursprung fächerförmig ausgesendet, so dass ausgehend von einem kompakten Gehäuse mit den Lichttastern ein ringförmiges oder teilringförmiges Schutzfeld, Überwachungsfeld oder ein Messbereich überwacht wird. Die Lichttaster sind dabei in einer oder mehreren Reihen angeordnet.

### Bezugszeichen:

1 Lichttaster
2 Lichtsender
3 Lichtimpulse
4 Lichtempfänger
5 Messbereich
6 Objekt
7 Steuer- und Auswerteeinheit
8 Abstand
9 Einzelphotonenlawinendioden
10 Array
11 Sendeoptik
12 Empfangsoptik
13 Referenzlichtempfänger
14 Referenzlichtsender
15 Gehäuse
16 Verbindungsleitungen
17 flexibler Träger
19 Selbstfahrendes Transportsystem
20 erste Gehäusekammer
21 zweite Gehäusekammer
22 Frontscheibe
23 Optikmodul
24 Messkern
25 Bandpassfilter
26 Backend
27 Schnittstelle
28 Businterface
29 Busleitung
30 Sicherheitskontroller
31 Makropixel
32 Hauptbewegungsrichtung
33 Kanaltrennung

## Patentansprüche

1. Lichttaster nach dem Lichtlaufzeitprinzip mit mindestens einem Lichtsender (2), der aufeinanderfolgende Lichtimpulse (3) in einen Messbereich (5) aussendet und mit
- mindestens einem Lichtempfänger (4), welcher die an einem Objekt (6) im Messbereich (5) zurückgeworfenen Lichtimpulse (3) aufnimmt und in Form von elektrischen Empfangssignalen einer Steuer- und Auswerteeinheit (7) zuführt,
- die unter Berücksichtigung der Lichtgeschwindigkeit aus der Zeit zwischen Aussendung und Empfang des Lichtimpulses (3) ein für den Abstand (8) des Objektes (6) zum Lichttaster (1) repräsentatives Abstandssignal ermittelt,
wobei
der Lichtempfänger (4) mindestens eine Einzelphotonenlawinendiode (9) aufweist,
**dadurch gekennzeichnet, dass** ein weiterer Lichtempfänger (4) als Referenzlichtempfänger (13) als zweiter Empfangskanal zur sicherheitsgerichteten Selbsttestung vorgesehen ist und/oder ein weiterer Lichtsender als Referenzlichtsender (14) zur sicherheitsgerichteten Selbsttestung vorgesehen ist.

2. Lichttaster nach Anspruch 1, **dadurch gekennzeichnet, dass** der Lichtempfänger (4) mindestens ein Array (10) bestehend aus Einzelphotonenlawinendioden (9) aufweist.

3. Lichttaster nach einem der vorhergehenden Ansprüche, **dadurch gekennzeichnet, dass** dem Lichtsender (2) eine Sendeoptik (11), insbesondere eine Linse vorgeordnet ist.

4. Lichttaster nach einem der vorhergehenden Ansprüche, **dadurch gekennzeichnet, dass** dem Lichtempfänger (4) eine Empfangsoptik (12), insbesondere eine Linse vorgeordnet ist.

5. Lichttaster nach einem der vorhergehenden Ansprüche, **dadurch gekennzeichnet, dass** der Lichttaster (1) ein Gehäuse (15) aufweist und mehrere Lichttaster über flexible Verbindungsleitungen (16) miteinander verbindbar sind.

6. Lichttaster nach einem der vorhergehenden Ansprüche, **dadurch gekennzeichnet, dass** die Steuer- und Auswerteeinheit (7) zweikanalig ausgebildet ist.

7. Lichttaster nach einem der vorhergehenden Ansprüche, **dadurch gekennzeichnet, dass** eine Mehrzahl von Lichttastern (1) auf einem flexiblen Träger (17) angeordnet sind.

8. Lichttaster nach einem der vorhergehenden Ansprüche, **dadurch gekennzeichnet, dass** ein Lagesensor (18) zur Auswertung der Sensorlage des Lichttasters vorgesehen ist.

9. Lichttaster nach einem der vorhergehenden Ansprüche, **dadurch gekennzeichnet, dass** der Lichttaster (1) ein integriertes Lichttastermodul ist.

10. Lichttaster nach einem der vorhergehenden Ansprüche, **dadurch gekennzeichnet, dass** mehrere Lichttaster (1) kreisförmig angeordnet sind, um einen Messbereich (5) von 90°, 180°, 270° oder 360° zu erfassen.

11. Selbstfahrendes Transportsystem (19) mit einer Mehrzahl von Lichttastern nach einem der vorhergehenden Ansprüche.

## Claims

1. A light scanner in accordance with the time of flight principle having at least one light transmitter (2) which transmits consecutive light pulses (3) into a measurement zone (5) and comprising
- at least one light receiver (4) which receives the light pulses (3) reflected at an object (6) in the measurement zone (5) and supplies them in the form of received electrical signals to a control and evaluation unit (7);
- said control and evaluation unit determining a distance signal representative of the distance (8) of the object (6) from the light scanner (1) while taking account of the speed of light from the time between the transmission and the reception of the light pulse (3),
wherein
the light receiver (4) has at least one single photon avalanche diode (9), **characterized in that** a further light receiver (4) is provided as a reference light receiver (13) as a second reception passage for a safety-relevant self-test; and/or **in that**
a further light transmitter is provided as a reference light transmitter (14) for the safety-relevant self-test

2. A light scanner in accordance with claim 1, **characterized in that** the light receiver (4) has at least one array (10) comprising single photon avalanche diodes (9).

3. A light scanner in accordance with one of the preceding claims, **characterized in that** a transmission optics (11), in particular a lens, is arranged in front of the light transmitter (2).

4. A light scanner in accordance with any one of the preceding claims, **characterized in that** a reception optics (12), in particular a lens, is arranged in front of the light receiver (4).

5. A light scanner in accordance with any one of the preceding claims, **characterized in that** the light scanner (1) has a housing (15) and a plurality of light scanners are connectable to one another via flexible connection lines (16).

6. A light scanner in accordance with any one of the preceding claims, **characterized in that** the control and evaluation unit (7) is configured with two passages.

7. A light scanner in accordance with any one of the preceding claims, **characterized in that** a plurality of light scanners (1) are arranged on a flexible carrier (17).

8. A light scanner in accordance with any one of the preceding claims, **characterized in that** a positional sensor (18) is provided for evaluating the sensor position of the light scanner.

9. A light scanner in accordance with any one of the preceding claims, **characterized in that** the light scanner (1) is an integrated light scanner module.

10. A light scanner in accordance with any one of the preceding claims, **characterized in that** a plurality of light scanners (1) are arranged in circular form to detect a measurement zone (5) of 90°, 180°, 270° or 360°.

11. A self-driving transport system (19) having a plurality of light scanners in accordance with any one of the preceding claims.

## Revendications

1. Détecteur optique selon le principe du temps de parcours de lumière, comportant au moins un émetteur de lumière (2) qui émet des impulsions lumineuses (3) successives dans une zone de mesure (5), et comportant
- au moins un récepteur de lumière (4) qui reçoit les impulsions lumineuses (3) réfléchies par un objet (6) dans la zone de mesure (5) et qui les amène sous forme de signaux de réception électriques jusqu'à une unité de commande et d'évaluation (7),
- qui, en prenant en compte la vitesse de la lumière à partir de la durée entre l'émission et la réception de l'impulsion lumineuse (3), détecte un signal de distance représentatif de la distance (8) de l'objet (6) par rapport au détecteur optique (1),
dans lequel
le récepteur de lumière (4) comprend au moins une diode à avalanche monophotonique (9),
**caractérisé en ce que** il est prévu un autre récepteur de lumière (4) à titre de récepteur de lumière de référence (13) en tant que second canal de réception en vue d'un autotest relatif à la sécurité, et/ou il est prévu un autre émetteur de lumière à titre d'émetteur de lumière de référence (14) en vue d'un autotest relatif à la sécurité.

2. Détecteur optique selon la revendication 1, **caractérisé en ce que** le récepteur de lumière (4) comprend au moins un réseau (10) constitué par des diodes à avalanche monophotonique (9).

3. Détecteur optique selon l'une des revendications précédentes, **caractérisé en ce qu'**il est prévu une optique d'émission (11), en particulier une lentille, disposée en amont de l'émetteur de lumière (2).

4. Détecteur optique selon l'une des revendications précédentes, **caractérisé en ce qu'**il est prévu une optique de réception (12), en particulier une lentille, disposée en amont du récepteur de lumière (4).

5. Détecteur optique selon l'une des revendications précédentes, **caractérisé en ce que** le détecteur optique (1) comprend un boîtier (15), et plusieurs détecteurs optiques sont susceptibles d'être reliés les uns aux autres par des lignes de connexion flexibles (16).

6. Détecteur optique selon l'une des revendications précédentes, **caractérisé en ce que** l'unité de commande et d'évaluation (7) est réalisée à deux canaux.

7. Détecteur optique selon l'une des revendications précédentes, **caractérisé en ce qu'**une pluralité de détecteurs optiques (1) sont agencés sur un support flexible (17).

8. Détecteur optique selon l'une des revendications précédentes, **caractérisé en ce qu'**il est prévu un capteur de position (18) pour évaluer la position de détecteur du détecteur optique.

9. Détecteur optique selon l'une des revendications précédentes, **caractérisé en ce que** le détecteur optique (1) est un module de détecteur optique intégré.

10. Détecteur optique selon l'une des revendications précédentes, **caractérisé en ce que** plusieurs détecteurs optiques (1) sont agencés en forme circulaire, afin de détecter une zone de mesure (5) de 90°, de 180°, de 270° ou de 360°.

11. Système de transport automoteur (19) comportant une pluralité de détecteurs optiques selon l'une des revendications précédentes.
